# EUROPÄISCHE PATENTSCHRIFT

(11) **EP 0 578 341 B1**
(45) Veröffentlichungstag und Bekanntmachung des Hinweises auf die Patenterteilung: **11.10.1995**
(21) Anmeldenummer: 93250084.6
(22) Anmeldetag: 16.03.1993
(51) Int. Cl.: G03B 21/132, G03B 21/30

(54) **Durchlichtprojektor**
Overhead projector
Rétroprojecteur

(30) Priorität: 09.07.1992 DE 9209310 U
(43) Veröffentlichungstag der Anmeldung: 12.01.1994
(73) Patentinhaber: AV-KOMMUNIKATION ANDERS & KERN GmbH & Co. KG, D-22851 Norderstedt (DE)
(72) Erfinder: Salger, Werner, W-2000 Hamburg 62 (DE)
(74) Vertreter: Patentanwälte Wenzel & Kalkoff

(56) Entgegenhaltungen:
- FR-A- 1 370 224
- GB-A- 943 346
- US-A- 3 488 115
- US-A- 4 449 800
- US-A- 4 968 134

## Beschreibung

Die Erfindung betrifft einen Durchlichtprojektor, bestehend aus einem von einem Grundkörper und einer Hubwanne gebildeten Gehäuse, das als Funktionsbaugruppen eine Lichtquelle, einen Spiegel und eine Fresnellinse umfaßt, wobei Grundkörper und Hubwanne zwischen einer flachen, raumsparenden Transportposition und einer vergrößerten, für die Betriebsfunktion des Durchlichtprojektors vorgesehenen Arbeitsposition relativ zueinander bewegbar miteinander verbunden sind, und einem im Gehäuse verschwenkbar gelagerten Hebel zur Ausführung der Relativbewegung zwischen Grundkörper und Hubwanne.

Durchlichtprojektoren dieser Art sind in der Praxis bekannt. Die Relativbewegung zwischen Grundkörper und Hubwanne des Gehäuses wird durch manuelle Betätigung der verschwenkbaren Säule erzeugt, die auf ein innerhalb des Gehäuses angeordnetes Gestängesystem nach Art eines Gelenkgetriebes einwirkt. Durch die Vielzahl der für ein solches Gestängesystem benötigten Bauteile ist die Herstellung derart ausgebildeter Durchlichtprojektoren hinsichtlich Kosten und Fertigungszeit aufwendig. Des weiteren ist die Handhabung insgesamt recht umständlich, und infolge der gegebenen Toleranzkette der Mehrzahl zusammenwirkender Bauteile des Gestänges können bei Betätigung der Säule Verklemmungen zwischen Hubwanne und Grundkörper nicht mit Sicherheit vermieden werden.

Weiterhin ist ein Durchlichtprojektor bekannt (GB-A-943 346), dessen Gehäuse einen Grundkörper und eine Hubwanne umfaßt, die teleskopisch zueinander bewegbar ausgebildet sind. Eine gegenüber einer zusammengefahrenen Lagerposition vergrößerte ausgefahrene Arbeitsposition des Durchlichtprojektors ist erreichbar, in dem über einen verschwenkbar gelagerten Hebel eine Relativbewegung zwischen beiden Gehäuseteilen erzeugt wird.

Der Erfindung liegt die Aufgabe zugrunde, einen Durchlichtprojektor der eingangs genannten Art zu schaffen, dessen Handhabung unkompliziert und gegen Verkantungen bzw. Verklemmungen gesichert ist und dessen Herstellungsaufwand, insbesondere Fertigungszeit und -kosten, reduziert werden können.

Diese Aufgabe wird bei einem Durchlichtprojektor der eingangs genannten Art dadurch gelöst, daß ein Teil des Hebels aus dem Gründkörper herausschwenkbar ist, und daß innerhalb des Grundkörpers ein mit einem Teil des Hebels verbundenes Rad oder Radsegment sowie weitere Übertragungselemente so angeordnet sind, daß das Verschwenken des Hebels aus dem Gehäuse heraus eine Verdrehung oder Verschwenkung des Rades oder Radsegments bewirkt, welche durch die Übertragungselemente in eine im wesentlichen geradlinige Bewegung der Hubwanne relativ zum Grundkörper umgesetzt wird. Somit ist ein besonders einfach und bequem von einer flachen Transport- und/oder Lagerform in eine Betriebs- und Arbeitsform und umgekehrt zu bringender Durchlichtprojektor geschaffen, dessen Handhabung zur Erreichung einer der gewünschten Endpositionen und -formen besonders einfach möglich ist, wobei die Relativbewegung zwischen Wanne und Grundkörper weitgehend kontinuierlich realisiert werden kann, da ein Verklemmen der die Relativbewegung übertragenden Bauteile im wesentlichen ausgeschlossen ist.

Vorteilhafterweise erfolgt der Eintragung der durch die Verschwenkung des Hebels erzeugten Antriebsbewegung des Rades oder Radsegmentes auf die Übertragungselemente kraft- und/ oder formschlüssig. Selbstverständlich ist es auch ohne weiteres denkbar, die Übertragung entweder nur kraftschlüssig oder nur formschlüssig auszubilden. Somit ist mit einfachen, kostengünstigen Mitteln eine besonders zuverlässige Kraftübertragung der Drehbewegung des Rades oder des Radsegmentes auf die Gehäuseteile zur Erzeugung der linearen Bewegung dieser zueinander möglich.

Eine besonders herstellungs- und kostengünstige Einrichtung zur Erzeugung und Übertragung der Relativbewegung zwischen Hubwanne und Grundkörper ist dadurch erreichbar, daß der Hebel als eine einen Objektivkopf aufnehmende Säule und das mit der Säule verbundene Rad oder Radsegment als Zahnrad oder Zahnsegment ausgebildet ist.

Vorteilhafterweise kann das Zahnsegment mit einem Ritzel einer mindestens ein Übertragungselement in Form eines Hubrades aufweisenden Hubwelle korrespondieren, wobei jedes Hubrad mit einer an der Hubwanne angeordneten Zahnstange wirkverbunden ist. So ist eine besonders präzise geführte Relativbewegung zwischen Hubwanne und Grundkörper erreichbar.

Eine besonders sichere und parallel zueinander gerichtete Relativbewegung zwischen Grundkörper und Hubwanne kann dann erreicht werden, wenn neben der mit dem Zahnsegment wirkverbundenen Hubwelle eine zweite Hubwelle vorgesehen ist, wobei die über das Ritzel übertragene Drehbewegung der mit dem Zahnsegment wirkverbundenen Hubwelle über mindestens eine Welle zur zweiten Hubwelle übertragen wird. Somit wird auch ein Verklemmen bei der Relativbewegung zwischen Hubwanne und des Grundkörpers durch die erreichbare exakte Führung ausgeschlossen. Dies wird noch dadurch unterstützt, daß mindestens zwei Zahnstangen an der Außenseite der im flachen Zustand vom Grundkörper übergriffenen Hubwanne angeordnet sind. Vorzugsweise können vier Zahnstangen vorgesehen sein, so daß durch eine solche im wesentlichen symmetrische ausgewogene ein Verkanten bei der Relativbewegung mit hoher Sicherheit vermieden werden.

Um die Herstellung weiter zu vereinfachen und Kosten zu verringern, können die Zahnstangen in die als Kunststoff-Spritzgußteil vorgesehene Hubwanne integriert sein, d.h. Hubwanne und Zahnstangen sind als einstückiges Bauteil spritzgegossen. Spezielle Maßnahmen für die Befestigung der Zahnstange an der Hubwanne sind dann nicht erforderlich.

Der Bedienungskomfort und die Handhabbarkeit des erfindungsgemäßen Durchlichtprojektors lassen sich weiterhin dadurch erhöhen, daß der im Grundkörper angeordnete Spiegel mittelbar oder unmittelbar über einen Drehpunkt wippenartig verschwenkbar ausgebildet ist. Dies ist konstruktiv besonders praktisch dadurch erreichbar, daß zur Verschwenkung des Spiegels bei der Relativbewegung zwischen Grundkörper und Hubwanne eine Zwangsführung vorgesehen ist. Dazu kann ein zwischen Zahnsegment und einem den Spiegel aufnehmenden Spiegelhalter angeordnetes Gestänge vorgesehen sein. Die Verschwenkung des Spiegels, die zur Gewährleistung der Arbeitsfähigkeit des Durchlichtprojektors im Rahmen der Umstellung von der Transport- oder Lagerform in die Betriebsform unumgänglich ist, kann somit ohne weitere zusätzliche Handgriffe erreicht werden. Dies gilt selbstverständlich auch umgekehrt, d.h. dann, wenn der Durchlichtprojektor von der Arbeits- bzw. Betriebsform des Durchlichtprojektors in die Transport- oder Lagerform gebracht wird.

Um eine besonders günstige Krafteinleitung für die Verschwenkbewegung des Spiegels zu erreichen, können Gestängeendbereiche des Gestänges versetzt zu einem Spiegelhalter-Drehpunkt am Spiegelhalter und zu einem Säulendrehpunkt als Schwenkpunkt für das Zahnsegment an diesem angeordnet sein.

Vorteilhafterweise kann das Gestänge einen U-förmig ausgebildeten, im eingebauten Zustand des Gestänges um 180° gedrehten, d.h. nach unten offenen Mittenbereich umfassen, an dessen U-Schenkeln jeweils ein Gestängeteil angeordnet ist. Der zwischen den U-Schenkeln gebildete Bereich nimmt im zusammengefahrenen Zustand des Durchlichtprojektors den Hubwannenrand auf, wobei der am Zahnsegment angelenkte Gestängeteil außerhalb der Hubwanne und der am Spiegelhalter angeordnete Gestängeteil innerhalb der Hubwanne liegt. Somit kann das Gestänge die Relativbewegung zwischen Hubwanne und Grundgehäuse übertragen, ohne selbst diese Bewegung einzuschränken oder gar zu behindern.

Um Fertigungstoleranzen ausgleichen und den Strahlengang zur korrekten Einleitung in das Objektiv justieren zu können, kann das Gestänge längenverstellbar ausgebildet sein.

Ein besonders herstellungsgünstiges Gestänge ist dadurch erreichbar, daß die Gestängeteile gleichartig bzw. -förmig aufgebaut sind, wobei die den Mittenbereich des Gestänges bildenden Gestängeteile über Schraubverbindungen verschiebbar miteinander verbunden sind. Damit läßt sich auch nach Lösen oder Lockern der Schraubverbindungen eine einfache Längenveränderung des Gestänges erreichen, wobei mindestens jeweils ein Lagerpunkt für die Schraubverbindungen in einem Gehäuseteil als Langloch ausgeführt ist.

Zur Längenverstellung des Gestänges können die Gestängeteile von einer Justierschraube durchgreifbare Anschläge umfassen. Mit der Verstellbarkeit über eine Justierschraube sind auch feinfühlige Ausrichtarbeiten auf einfache Weise ausführbar. Dazu kann die Justierschraube von einer zwischen den Anschlägen lagerbaren Feder umgeben sein, wobei die Längenverstellbarkeit des Gestänges über Einwirkung auf die Justierschraube bzw. auf eine mit ihr verbundenen Mutter, erfolgt, wodurch der Abstand zwischen den Anschlägen und damit die Gesamtlänge des Gestänges nach Lösen oder Lockern der die Gehäuseteile verbindenden Schraubverbindungen veränderbar ist.

Weitere Vorteile und Ausführungsformen oder -möglichkeiten der Erfindung gehen aus der folgenden Beschreibung der in den schematischen Zeichnungen dargestellten Ausführungsbeispiele hervor. Es zeigen
- Fig. 1: eine Schnittdarstellung eines erfindungsgemäßen Durchlichtprojektors in Arbeits- bzw. Betriebsposition, in der die Hubwanne aus den Bereich des Grundkörpers des Gehäuses herausgehoben ist,
- Fig. 2: eine Darstellung eines Durchlichtprojektors in Transport- bzw. Lagerposition, d.h. bei eingefahrener Hubwanne,
- Fig. 3: eine teilweise Schnittdarstellung eines Durchlichtprojektors entsprechend Ansicht-A der Fig. 1
- Fig. 4: eine teilweise Schnittdarstellung eines Durchlichtprojektors entsprechend nach Ansicht-B der Fig. 1 und
- Fig. 5: eine Detaildarstellung des im Durchlichtprojektor einsetzbaren Gestänges in verschiedenen Ansichten.

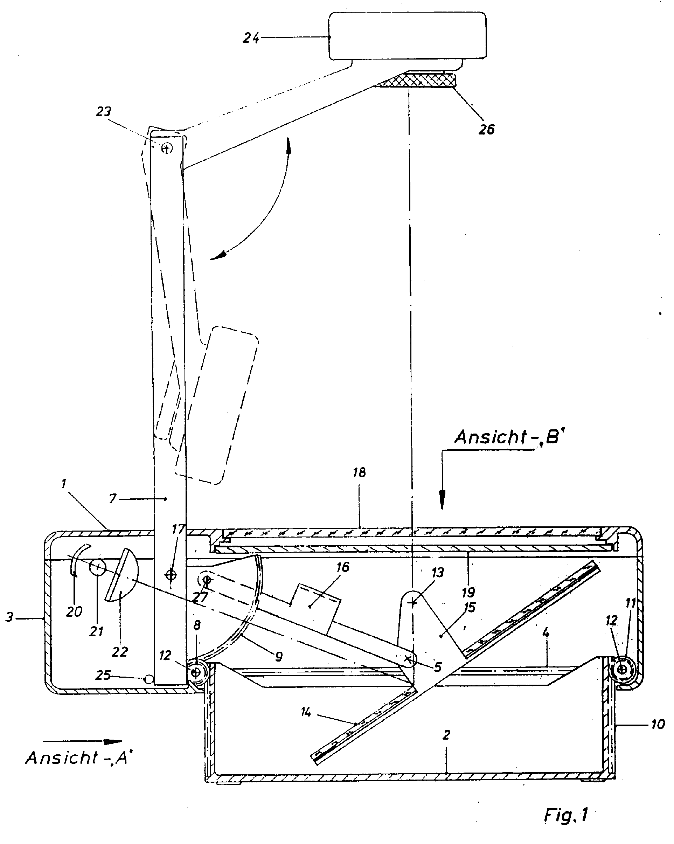

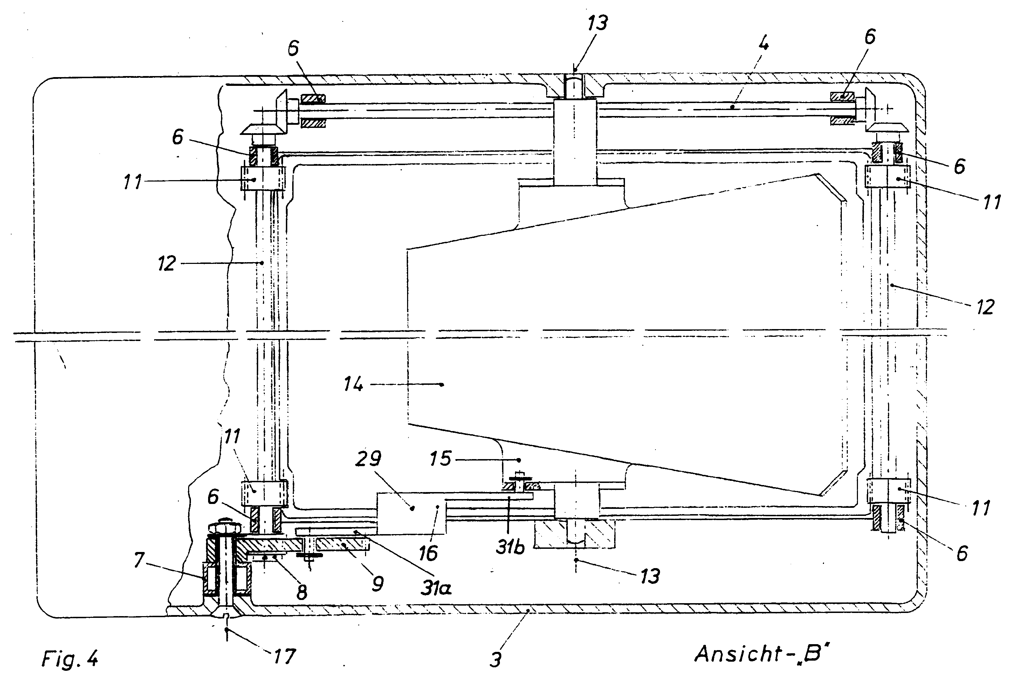

Ein Durchlichtprojektor entsprechend Fig. 1 umfaßt ein im wesentlichen aus einer Hubwanne 2 und einem Grundkörper 3 aufgebautes bestehendes Gehäuse 1, das vorzugsweise aus Kunststoff gefertigt ist. Innerhalb des Gehäuses 1 sind zur Erzielung der Funktion des Durchlichtprojektors notwendige Baugruppen wie eine Glasplatte 18, eine Fresnellinse 19, ein Hohlspiegel 20, eine Lampe 21 und eine Kondensorlinse 22 in allgemein üblicher und bekannter Weise angeordnet. Im Grundkörper 3 ist eine Säule 7 um einen Säulenschwenkpunkt 17 verschwenkbar gelagert. Der aus dem Grundkörper 3 herausschwenkbare Teil der Säule 7 trägt einen Objektivkopf 24 mit Objektiv 26. Der Objektivkopf 24 ist an einem hier nicht näher bezeichneten Schwenkarm der Säule 7 gelagert und wird durch Schwenken um den Punkt 23 an der Säule 7 in Arbeitslage gebracht. Im Bereich des Grundkörpers 3 ist an der Säule 7 ein Zahn(rad)segment 9 fest angeordnet. Bei Verschwenken der Säule 7 kämmt der Zahnkranz des Zahnsegments 9 mit einem auf einer Hubwelle 12 angeordneten Ritzel 8, wodurch die Welle 12 in eine Drehbewegung versetzt wird. Auf der Hubwelle 12 sind, wie man besonders deutlich aus Fig. 3 erkennt, Hubräder 11 angeordnet, die jeweils in eine an der Außenseite der Hubwanne 2 vorgesehene Zahnstange 10 eingreifen. Hubwanne 2 und Zahnstangen 10 sind besonders herstellungsgünstig als ein gemeinsames Kunststoff-Spritzgußteil fertigbar. Parallel zu der vom Zahnsegment 9 angetriebenen Hubwelle 12 ist am gegenüberliegenden Ende der Hubwanne 2 eine weitere Hubwelle 12 über Lager 6 angeordnet. Diese wird von einer Welle 4 angetrieben, die mit der erstgenannten Hubwelle 12 in Wirkverbindung steht. Diese Verbindung wird über an den Enden der Wellen 4, 12 angeordnete ineinandergreifende, nicht näher bezeichnete Winkelräder realisiert.

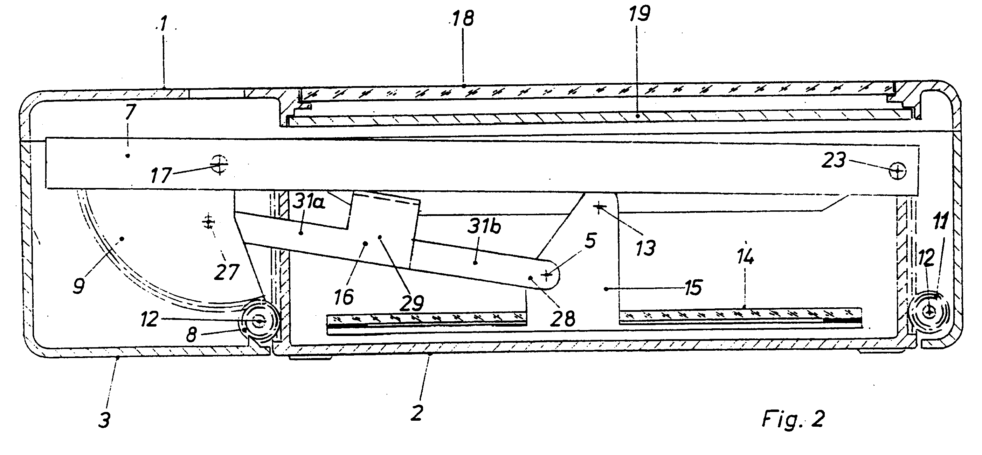

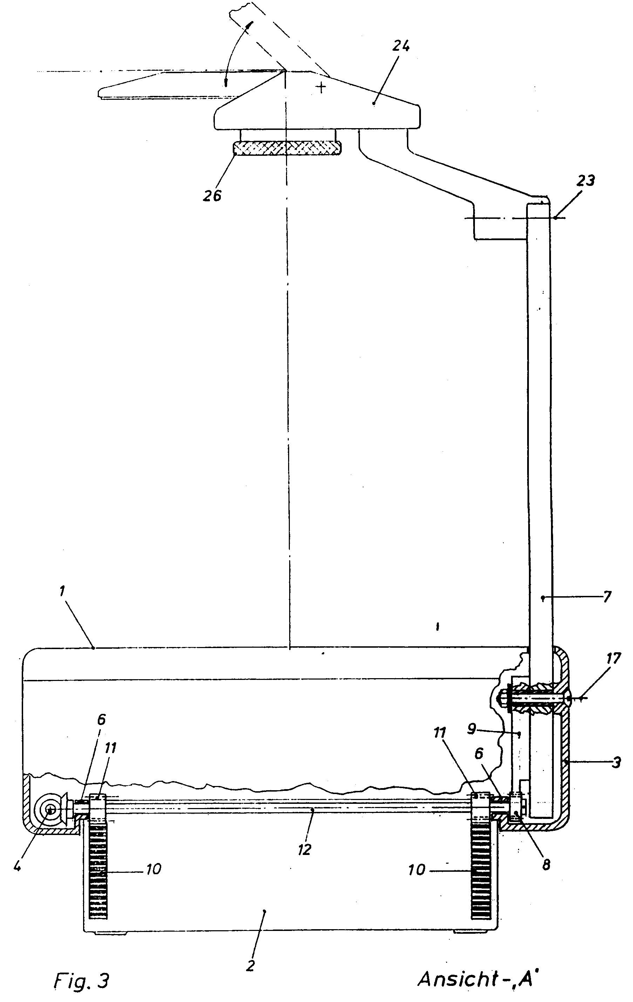

Beim Verschwenken der Säule 7 aus der Transportposition des Durchlichtprojektors entsprechend Fig. 2 wird die Hubwanne 2 über das mit der Säule 7 fest verbundene Zahnsegment 9, Ritzel 8, Hubräder 11 und Zahnstangen 10 relativ zum Grundkörper 3 verfahren. Diese Relativbewegung ist aufgrund der allseitigen, ausgewogenen Anordnung von vier Hubrädern 11 in den Eckbereichen des Gehäuses und deren Eingriff in vier sich entlang der Seiten desselben erstreckenden Zahnstangen 10 der Hubwanne 2 klemmfrei realisierbar.

Im Gehäuse 1 ist auf einem Spiegelhalter 15 ein Spiegel 14 zur Umlenkung des von der Lampe 21 erzeugten Lichtstrahles angeordnet. Dazu ist der Spiegelhalter 15 wippenartig um einen mit dem Grundkörper 3 verbundenen Schenkpunkt 13 schwenkbar gelagert. Um eine Zwangsführung des Umlenkspiegels 14 und der Spiegelhalterung 15 bei der Relativbewegung zwischen Grundkörper 3 und Hubwanne 2 zu ermöglichen, ist zwischen Zahnsegment 9 und Spiegelhalterung 15 ein Gestänge 16 angeordnet. Dabei ist ein Zahnsegmentanlenkpunkt 27 für das Gestänge im Abstand zum Säulenschwenkpunkt 17 und ein Spiegelhalteranlenkpunkt 5 für das Gestänge 16 ebenfalls von dem Spiegelhalterschwenkpunkt 13 beabstandet angeordet, so daß Säule 7, Zahnsegment 9, Gestänge 16 und Spiegelhalterung 15 nach Art eines Lenkergetriebes funktionieren. Somit ist bei einer Relativbewegung zwischen Hubwanne 2 und Grundkörper 3 eine zwangsweise verschwenkung des Spiegels 14 in den Arbeitszustand oder zurück in den Transport- und/oder Lagerzustand gewährleistet, ohne daß dazu zusätzliche Handgriffe erforderlich wären.

Fig. 2 zeigt den erfindungsgemäßen Durchlichtprojektor bei in das Gehäuse 1 eingefahrener Hubwanne 2, die dabei von dem Grundkörper 3 übergriffen ist. Dadurch ergibt sich eine flache Form des Durchlichtprojektors, so daß dieser einfach zu transportieren und/oder platzsparend zu lagern ist. Zur Erreichung des arbeitsfähigen Betriebszustandes entsprechend Fig. 1 wird die Säule 7 mit dem den Objektivkopf 24 tragenden Ende aus dem Grundkörper 3 geschwenkt. Dabei wird, wie bereits beschrieben, die Relativbewegung zwischen Hubwanne 2 und Grundkörper 3 realisiert, in dem die dabei erzeugten Drehbewegungen der Hubwellen 12 in eine geradlinige Relativbewegung zwischen Hubwanne 2 und Grundkörper 3 übertragen werden.

Aus Fig. 3 ist besonders deutlich die Anordnung von Ritzel 8 und Hubrädern 11 auf der Hubwelle 12 sowie das Eingreifen der Hubräder 11 in die Zahnstangen 10 der Hubwanne 2 erkennbar. Die Hubwelle 12 ist dabei in Lagern 6 drehbar angeordnet, so daß bei Verschwenkung der Säule 7 und damit Verschwenkbewegung des Zahnsegment 9 das Ritzel 8 der Hubwelle 12 in Drehbewegung versetzt und die Relativbewegung zwischen Hubwanne 2 und Grundkörper 3 erzeugt wird. Ebenfalls ist aus dieser Figur die Welle 4 erkennbar, die die vom Zahnradsegment 9 angetriebene Hubwelle 12 mit der parallel zu ihr angeordneten zweiten Hubwelle 12 verbindet, wobei diese Verbindung über die bereits erwähnten, einandergreifenden Winkelräder realisiert wird, so daß die Drehbewegung der ersten Hubwelle 12 exakt auf die zweite Hubwelle 12 übertragen werden kann.

Die Draufsicht entsprechend Fig. 4 zeigt u. a. die spezielle Gestaltung des Gestänges 16. Dieses weist zwei zueinander versetzt angeordnete Gestängeteile 31a, b auf und umfaßt einen U-förmig ausgebildeten Mittenbereich 29. Ein erstes Gestängeteil 31a ist in dem Zahnsegmentanlenkpunkt 27 mit dem Zahnsegment 9 und ein zweites Gestängeteil 31b in dem Spiegelhalteranlenkpunkt 5 mit dem Spiegelhalter 15 verbunden.

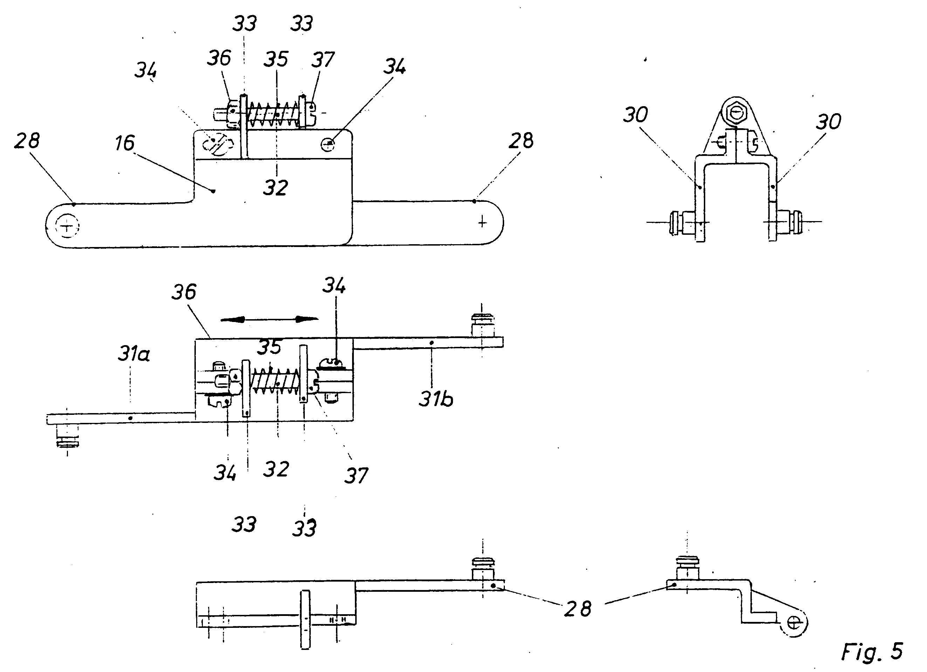

Aus Fig. 5 wird deutlich, daß das Gestänge 16 aus zwei gleichartig ausgebildeten Gestängeteilen 31a, b zusammengesetzt ist. Dazu werden diese in ihrem Mittenbereich 29 über Schraubverbindungen 34 zusammengefügt, so daß sich im Mittenbereich 29 ein U-förmiges Teil ergibt, das nach unten geöffnet ist. Dadurch kann die Hubwanne 2 im Transportzustand des Durchlichtprojektors in die Öffnung einfahren. Die Schrauben der Verbindungen 34 sind jeweils in mindestens einem Langloch gelagert, so daß das Gestänge 16 längenverstellbar ist. Um diese Längenverstellbarkeit besonders einfach realisieren zu können, umfassen beide Gestängeteile 31a und b jeweils einen Anschlag 33. Die Anschläge 33 werden von einer Justierschraube 32 durchgriffen, wobei der Abstand zwischen den Anschlägen 33 von einem Schraubkopf 37 und einer Mutter 36 bestimmt wird. Zwischen den Anschlägen 33 ist um die Justierschraube 32 herum eine Feder 35 angeordnet. Nach Lockern bzw. Lösen der Schraubverbindung 34 kann durch entsprechende Einwirkung auf die Justierschraube 32 bzw. deren Mutter 36 der Abstand zwischen den Anschlägen 33 verändert werden, so daß sich damit auch die Gesamtlänge des Gestänges 16 variieren läßt. Somit ist eine besonders exakte Ausrichtung des Spiegels 14 bei schneller und unkomplizierter Handhabung durch einfache Justierung möglich.

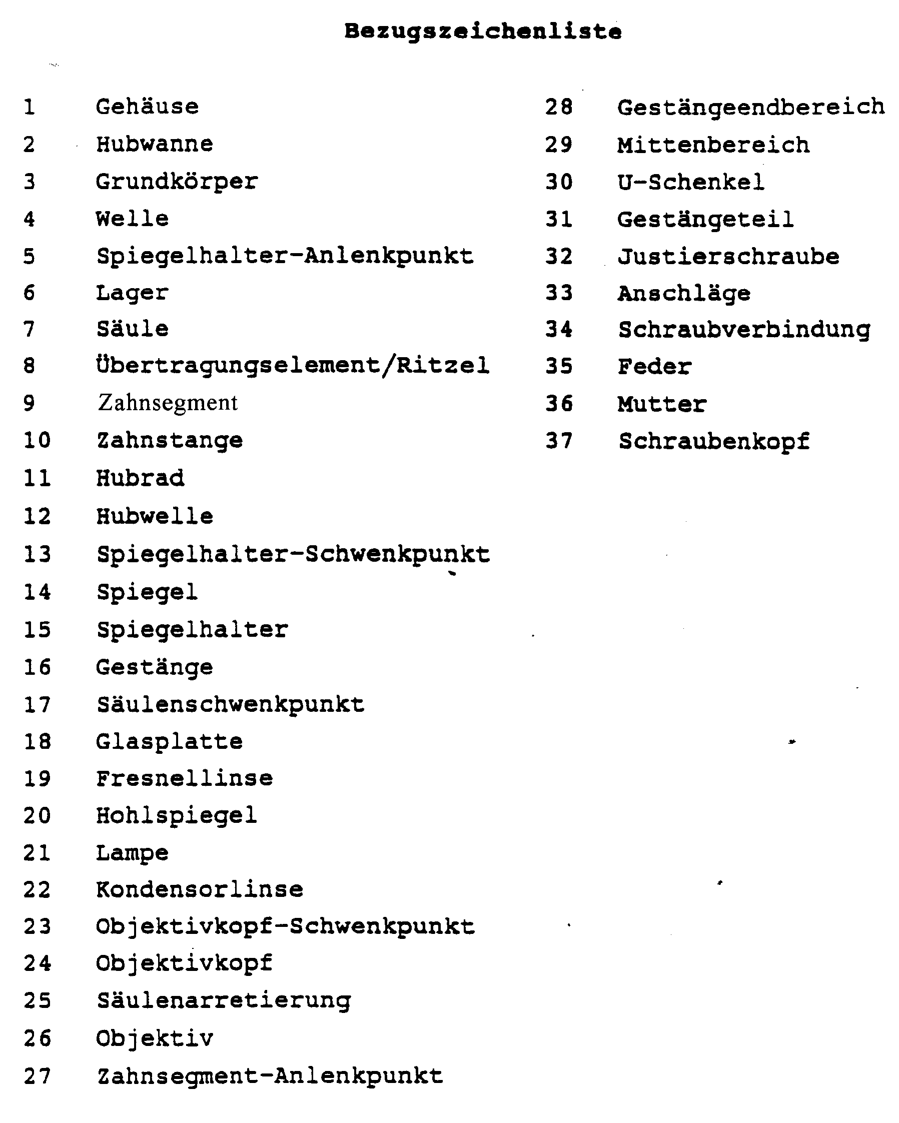

## Patentansprüche

1. Durchlichtprojektor bestehend aus einem von einem Grundkörper (3) und einer Hubwanne (2) gebildeten Gehäuse (1), das als Funktionsbaugruppen eine Lichtquelle, einen Spiegel und eine Fresnellinse umfaßt, wobei Grundkörper (3) und Hubwanne (2) zwischen einer flachen, raumsparenden Transportposition und einer vergrößerten, für die Betriebsfunktion des Durchlichtprojektors vorgesehenen Arbeitsposition relativ zueinander bewegbar miteinander verbunden sind, und einem im Gehäuse (1) verschwenkbar gelagerten Hebel (7) zur Ausführung der Relativbewegung zwischen Grundkörper (3) und Hubwanne (2), **dadurch gekennzeichnet**, daß ein Teil des Hebels (7) aus dem Gründkörper (3) herausschwenkbar ist, und daß innerhalb des Grundkörpers (3) ein mit einem Teil des Hebels (7) verbundenes Rad oder Radsegment (9) sowie weitere Übertragungselemente (10, 11, 12) so angeordnet sind, daß das Verschwenken des Hebels (7) aus dem Gehäuse (1) heraus eine Verdrehung oder Verschwenkung des Rades oder Radsegmentes (9) bewirkt, welche durch die Übertragungselemente (10, 11, 12) in eine im wesentlichen geradlinige Bewegung der Hubwanne (2) relativ zum Grundkörper (3) umgesetzt wird.

2. Durchlichtprojektor nach Anspruch 1, **dadurch gekennzeichnet**, daß der Eintrag der durch die Verschwenkung des Hebels (7) erzeugten Antriebsbewegung des Rades oder Radsegmentes (9) auf die Übertragungselemente (10, 11, 12) kraft- und/oder formschlüssig erfolgt.

3. Durchlichtprojektor nach Anspruch 1 oder 2, **dadurch gekennzeichnet**, daß der Eintrag der durch die Verschwenkung des Hebels (7) erzeugten Antriebsbewegung des Rades oder Radsegmentes (9) auf die Übertragungselemente (10, 11, 12) kraftschlüssig erfolgt.

4. Durchlichtprojektor nach Anspruch 1 oder 2, **dadurch gekennzeichnet**, daß der Eintrag der durch die Verschwenkung des Hebels (7) erzeugten Antriebsbewegung des Rades oder Radsegmentes (9) auf die Übertragungselemente (10, 11, 12) formschlüssig erfolgt.

5. Durchlichtprojektor nach einer der Ansprüche 1, 2 oder 4, **dadurch gekennzeichnet**, daß der Hebel (7) als eine einen Objektivkopf (24) aufnehmende Säule und das Rad oder Radsegment als Zahnrad oder Zahnsegment (9) ausgebildet ist.

6. Durchlichtprojektor nach einer der Ansprüche 1, 2, 4 oder 5, **dadurch gekennzeichnet**, daß das Radsegment (9) als Zahnsegment (9) ausgebildet ist und mit einem Ritzel (8) einer mindestens ein Übertragungselement in Form eines Hubrades (11) aufweisenden Hubwelle (12) korrespondiert, wobei jedes Hubrad (11) mit einer der Hubwanne (2) zugeordneten Zahnstange (10) wirkverbunden ist.

7. Durchlichtprojektor nach Anspruch 6, **dadurch gekennzeichnet**, daß neben der mit dem Zahnsegment (9) wirkverbundenen Hubwelle (12) eine zweite Hubwelle (12) vorgesehen ist, wobei die über das Ritzel (8) übertragene Drehbewegung der mit dem Zahnsegment (9) wirkverbundenen Hubwelle (12) über mindestens eine Welle (4) zur zweiten Hubwelle (12) übertragen wird.

8. Durchlichtprojektor nach einem der Ansprüche 6 oder 7, **dadurch gekennzeichnet**, daß mindestens zwei Zahnstangen (10) an der Außenseite der im flachen Zustand vom Grundkörper (3) übergriffenen Hubwanne (2) angeordnet sind.

9. Durchlichtprojektor nach Anspruch 8, **dadurch gekennzeichnet**, daß die Zahnstangen (10) in die als Kunststoff-Spritzgußteil vorgesehene Hubwanne integriert sind.

10. Durchlichtprojektor nach einem der Ansprüche 1 bis 9, **dadurch gekennzeichnet**, daß der im Grundkörper (3) angeordnete Spiegel (14) mittelbar oder unmittelbar über einen Drehpunkt (13) wippenartig verschwenkbar ausgebildet ist.

11. Durchlichtprojektor nach Anspruch 10, **dadurch gekennzeichnet**, daß zur Verschwenkung des Spiegels (14) bei der Relativbewegung zwischen Grundkörper (3) und Hubwanne (2) eine Zwangsführung vorgesehen ist.

12. Durchlichtprojektor nach Anspruch 10 oder 11, **dadurch gekennzeichnet**, daß die Zwangsführung über ein zwischen dem als Zahnsegment ausgebildeten Radsegment (9) und einem Spiegelhalter (15) angeordnetes Gestänge (16) erreichbar ist.

13. Durchlichtprojektor nach Anspruch 12, **dadurch gekennzeichnet**, daß Gestängeendbereiche (28) des Gestänges (16) versetzt zu einem Spiegelhalter-Schwenkpunkt (13) am Spiegelhalter (15) und zu einem Säulenschwenkpunkt (17) für das Zahnsegment (9) angeordnet sind.

14. Durchlichtprojektor nach Anspruch 12 oder 13, **dadurch gekennzeichnet**, daß das Gestänge (16) einen U-förmig ausgebildeten, im eingebauten Zustand nach unten offenen Mittenbereich (29) umfaßt, an dessen U-Schenkeln (30) jeweils ein Gestängeteil (31) angeordnet ist, und daß der zwischen den U-Schenkeln (30) gebildete Bereich im zusammengefahrenen Zustand des Durchlichtprojektors den Hubwannenrand aufnimmt, wobei der am Zahnsegment (9) angelenkte Gestängeteil (31a) außerhalb der Hubwanne (3) und der am Spiegelhalter (15) angeordnete Gestängeteil (31b) innerhalb der Hubwanne (3) liegt.

15. Durchlichtprojektor nach einem der Ansprüche 12 bis 14, **dadurch gekennzeichnet**, daß das Gestänge (16) längenverstellbar ausgebildet ist.

16. Durchlichtprojektor nach einem der Ansprüche 12 bis 15, **dadurch gekennzeichnet**, daß die Gestängeteile (31) identisch zueinander ausgebildet sind, wobei die den Mittenbereich (29) des Gestänges (16) bildenden Gestängeteile (31) über Schraubverbindungen (34) verschiebbar miteinander verbunden sind.

17. Durchlichtprojektor nach einem der Ansprüche 12 bis 16, **dadurch gekennzeichnet**, daß zur Längsverstellung des Gestänges (16) die Gestängeteile (31) von einer Justierschraube (32) durchgreifbare Anschläge (33) umfassen.

18. Durchlichtprojektor nach einem der Ansprüche 12 bis 17, **dadurch gekennzeichnet**, daß die Justierschraube (31) von einer zwischen den Anschlägen (33) lagerbaren Feder (35) umgeben ist, wobei die Längenverstellbarkeit des Gestänges (16) durch Einwirkung auf die Justierschraube (32) bzw. auf eine mit dieser verbundenen Mutter (36) erfolgt, wodurch der Abstand zwischen den Anschlägen (33) veränderbar ist, nachdem die die Gestängeteile (31) verbindenden Schraubverbindungen (34), gelöst bzw. gelockert sind.

## Claims

1. Transmitted light projector consisting of a housing (1), formed from a base shell (3) and a lifting trough (2) that comprises as functional subassemblies a light source, a mirror and a Fresnel lens, wherein base shell (3) and lifting trough (2) are connected to one another in movable manner relative to one another between a flat, space saving transport position and an expanded working position provided for the operating function of the transmitted light projector, and of a lever (7) mounted pivotably in the housing (1) for performing the relative movement between the base shell (3) and lifting trough (2), characterised in that a part of the lever (7) can be pivoted out of the base shell (3) and that within the base shell (3) a wheel or segment of a wheel (9) connected to a part of the lever (7) and other transmission elements (10, 11, 12) are arranged so that the pivoting of the lever (7) out of the housing (1) causes a twisting or pivoting of the wheel or wheel segment (9) which is converted by the transmission elements (10, 11, 12) into an essentially straight line movement of the lifting trough (2) relative to the base shell (3).

2. Transmitted light projector according to claim 1, characterised in that the transfer of the drive movement of the wheel or wheel segment (9), produced by pivoting the lever (7), on to the transmission elements (10, 11, 12) occurs in a force-locking and/or form-locking manner.

3. Transmitted light projector according to claim 1 or 2, characterised in that the transfer of the drive movement of the wheel or wheel segment (9), produced by pivoting the lever (7), on to the transmission elements (10, 11, 12) occurs in a force-locking manner.

4. Transmitted light projector according to claim 1 or 2, characterised in that the transfer of the drive movement of the wheel or wheel segment (9), produced by pivoting the lever (7), on to the transmission elements (10, 11, 12) occurs in a form-locking manner.

5. Transmitted light projector according to one of the claims 1, 2 or 4, characterised in that the lever (7) is constructed as a column receiving an objective head (24) and the wheel or wheel segment is constructed as a gear wheel or toothed segment (9).

6. Transmitted light projector according to one of the claims 1, 2, 4 or 5, characterised in that the toothed segment (9) corresponds with a pinion (8) of a lifting shaft (12) comprising at least one transmission element in the form of a lifting wheel (11), wherein each lifting wheel (11) is operatively connected to a gear rack (10) associated with the lifting trough (2).

7. Transmitter light projector according to claim 6, characterised in that in addition to the lifting shaft (12) operatively connected to the toothed segment (9), a second lifting shaft (12) is provided, wherein the turning movement of the lifting shaft (12) operatively connected to the toothed segment (9) transmitted through the pinion (8) is transmitted through at least one shaft (4) to the second lifting shaft (12).

8. Transmitted light projector according to one of the claims 6 or 7, characterised in that at least two gear racks (10) are arranged at the periphery of the lifting trough (2) which in the flat condition is lapped over by the base shell (3).

9. Transmitted light projector according to claim 8, characterised in that the gear racks (10) are integrated into the lifting trough provided as a plastic injection moulded part.

10. Transmitted light projector according to one of the claims 1 to 9, characterised in that the mirror (14) arranged in the base shell (3) is constructed pivotably in counterpoised manner directly or indirectly through a centre of rotation (13).

11. Transmitted light projector according to claim 10, characterised in that for pivoting the mirror (14) during the relative movement between the base shell (3) and lifting trough (2), a positive guide is provided.

12. Transmitted light projector according to claim 10 or 11, characterised in that the positive guidance is achievable through rods (16) arranged between the toothed segment (9) and a mirror holder (15).

13. Transmitted light projector according to claim 12, characterised in that the rod end regions (28) of the rods (16) are arranged offset to a mirror holder pivot point (13) on the mirror holder (15) and to a column pivot point (17) for the toothed segment (9).

14. Transmitted light projector according to claim 12 or 13, characterised in that the rods (16) comprise a central region (29) constructed in a U-shape, which in the fitted state is downwardly open, on each of whose U-limbs (30) a rod part (31) is arranged and that in the collapsed state of the transmitted light projector, the region formed between the U-limbs (30) receives the rim of the lifting trough, wherein the rod part (31a) pivoted on the toothed segment (9) lies outside the lifting trough (3) and the rod part (31b) arranged on the mirror holder (15) lies within the lifting trough (3).

15. Transmitted light projector according to one of the claims 12 to 14, characterised in that the rods (16) are constructed in a longitudinally adjustable manner.

16. Transmitted light projector according to one of the claims 12 to 15, characterised in that the rod parts (31) are constructed identical to one another, wherein the rod parts (31) forming the central region (29) of the rods (16) are connected displaceably to one another through screw connections (34).

17. Transmitted light projector according to one of the claims 12 to 16, characterised in that for the longitudinal adjustment of the rods (16), the rod parts (31) include limit stops (33) through which an adjusting screw (32) can pass.

18. Transmitted light projector according to one of the claims 12 to 17, characterised in that the adjusting screw (31) is surrounded by a spring (35) mountable between the limit stops (33), wherein the longitudinal adjustment of the rods (16) occurs through action on the adjusting screw (32) or on a nut (36) connected to it, as a result of which the distance between the limit stops (33) can be modified after the screw connections (34) connecting the rod parts (31) have been freed or loosened.

## Revendications

1. Rétroprojecteur constitué d'un boîtier (1), formé d'un corps de base (3) et d'un bac élévateur (2), le boîtier (1) comportant, comme composants fonctionnels, une source de lumière, un miroir et une lentille de Fresnel, le corps de base (3) et le bac élévateur (2) étant reliés l'un à l'autre, de façon à pouvoir se déplacer l'un par rapport à l'autre, entre une position de transport, aplatie, peu encombrante, et une position de travail, plus grande, prévue pour le rétroprojecteur en mode marche, et comportant un levier (7), logé en pivotement dans le boîtier (1), destiné à exécuter le mouvement relatif entre le corps de base (3) et le bac élévateur (2), caractérisé en ce qu'une partie du levier (7) peut pivoter vers l'extérieur du corps de base (3), et que, à l'intérieur du corps de base (3), une roue ou un segment de roue (9), relié à une partie du levier (7), ainsi que d'autres éléments de transmission (10, 11, 12), sont disposés de façon que le pivotement du levier (7), à partir du boîtier (1), provoque une rotation ou un pivotement de la roue ou du segment de roue (9), rotation ou pivotement qui, par les éléments de transmission (10, 11, 12), est converti en un mouvement essentiellement rectiligne du bac élévateur (2) par rapport au corps de base (3).

2. Rétroprojecteur selon la revendication 1, caractérisé en ce que l'application, aux éléments de transmission (10, 11, 12), du mouvement d'entraînement, produit par le pivotement du levier (7), de la roue ou du segment de roue (9), s'effectue par une liaison dynamique et/ou par une liaison avec correspondance de forme.

3. Rétroprojecteur selon la revendication 1 ou 2, caractérisé en ce que l'application, aux éléments de transmission (10, 11, 12), du mouvement d'entraînement, produit par le pivotement du levier (7), de la roue ou du segment de roue (9), s'effectue par une liaison dynamique.

4. Rétroprojecteur selon la revendication 1 ou 2, caractérisé en ce que l'application, aux éléments de transmission (10, 11, 12), du mouvement d'entraînement, produit par le pivotement du levier (7), de la roue ou du segment de roue (9), s'effectue par une liaison avec correspondance de forme.

5. Rétroprojecteur selon l'une des revendications 1, 2 ou 4, caractérisé en ce que le levier (7) est constitué d'une colonne recevant une tête porte-objectif (24), et la roue ou le segment de roue est constitué d'une roue dentée ou d'un secteur denté (9).

6. Rétroprojecteur selon l'une des revendications 1, 2, 4 ou 5, caractérisé en ce que le secteur denté (9) correspond à un pignon (8) d'un arbre élévateur (12), qui comporte au moins un élément de transmission sous forme d'une roue élévatrice (11), chaque roue élévatrice (11) étant reliée d'une manière opérationnelle à une crémaillère (10) affectée au bac élévateur (2).

7. Rétroprojecteur selon la revendication 6, caractérisé en ce que l'on prévoit, outre l'arbre élévateur (12) relié par liaison opérationnelle au secteur denté (9), un deuxième arbre élévateur (12), le mouvement de rotation, transmis par le pignon (8), de l'arbre élévateur (12) relié par liaison opérationnelle au secteur denté (9), étant transmis, par l'intermédiaire d'au moins un arbre (4), au deuxième arbre élévateur (12).

8. Rétroprojecteur selon l'une des revendications 6 ou 7, caractérisé en ce qu'au moins deux crémaillères (10) sont disposées sur le côté extérieur du bac élévateur (2), qui, en position aplatie, est recouvert du corps de base (3).

9. Rétroprojecteur selon la revendication 8, caractérisé en ce que les crémaillères (10) sont intégrées dans le bac élévateur, prévu sous forme d'une pièce en plastique moulée par injection.

10. Rétroprojecteur selon l'une des revendications 1 à 9, caractérisé en ce que le miroir (14) disposé dans le corps de base (3) est conçu de façon à pouvoir pivoter directement ou indirectement, comme une bascule, autour d'un centre de rotation (13).

11. Rétroprojecteur selon la revendication 10, caractérisé en ce qu'on prévoit un guidage forcé pour faire pivoter le miroir (14) lors du mouvement relatif entre le corps de base (3) et le bac élévateur (2).

12. Rétroprojecteur selon la revendication 10 ou 11, caractérisé en ce que le guidage forcé peut être réalisé par l'intermédiaire d'une tringle (16) disposée entre le secteur denté (9) et un support de miroir (15).

13. Rétroprojecteur selon la revendication 12, caractérisé en ce que des zones en bout (28) de la tringle (16) sont disposées décalées par rapport à un centre de pivotement (13) du support de miroir (15) contre ce dernier, et par rapport à un centre de pivotement de colonne (17) destiné au secteur denté (9).

14. Rétroprojecteur selon la revendication 12 ou 13, caractérisé en ce que la tringle (16) comporte une zone centrale (29), en forme de U, ouverte vers l'intérieur à l'état encastré, une partie de tringle (31) étant rapportée à chacune des branches en U (30) de cette zone centrale, et que la zone formée entre les branches en U (30) loge le bord du bac élévateur quand le rétroprojecteur est refermé, auquel cas la partie de tringle (31a) articulée au secteur denté (9) se trouve à l'extérieur du bac élévateur (3), et la partie de tringle (31b) disposée contre le support de miroir (15) se trouve à l'intérieur du bac élévateur (3).

15. Rétroprojecteur selon l'une des revendications 12 à 14, caractérisé en ce que la tringle (16) est réglable en longueur.

16. Rétroprojecteur selon l'une des revendications 12 à 15, caractérisé en ce que les parties de tringle (31) sont identiques les unes aux autres, les parties de tringle (31) formant la zone centrale (29) de la tringle (6) étant reliées les unes aux autres en coulissement par l'intermédiaire de raccordements vissés (34).

17. Rétroprojecteur selon l'une des revendications 12 à 16, caractérisé en ce que, pour le réglage en longueur de la tringle (16), les parties de tringle (31) comportent des butées (33) dans lesquelles peut passer une vis de réglage (32).

18. Rétroprojecteur selon l'une des revendications 12 à 17, caractérisé en ce que la vis de réglage (31) est entourée par un ressort (35), pouvant être logé entre les butées (33), le réglage en longueur de la tringle (16) pouvant être réalisé par action sur la vis de réglage (32) ou sur un écrou (36) lié à ce dernier, de sorte que la distance entre les butées (33) peut varier, après que l'on a desserré ou relâché les raccordements vissés (34) qui relient les parties de tringle (31).
